# EUROPÄISCHE PATENTSCHRIFT

(11) **EP 2 419 355 B1**
(45) Veröffentlichungstag und Bekanntmachung des Hinweises auf die Patenterteilung: **26.06.2013**
(21) Anmeldenummer: 10711146.0
(22) Anmeldetag: 20.03.2010
(51) Int. Cl.: B65G 57/32

(54) **VORRICHTUNG SOWIE VERFAHREN ZUR BILDUNG VON PRODUKSTAPELN**
DEVICE AND METHOD FOR FORMING PRODUCT STACKS
DISPOSITIF ET PROCÉDÉ DE FORMATION DE PILES DE PRODUITS

(30) Priorität: 15.04.2009 DE 102009017108
(43) Veröffentlichungstag der Anmeldung: 22.02.2012
(73) Patentinhaber: KHS GmbH, 44143 Dortmund (DE)
(72) Erfinder: JUNGHANS, Joachim, 60326 Frankfurt (DE); HASTENTEUFEL, Harry, 67550 Worms (DE); HOLZER, Hans-Werner, 67596 Dittelsheim-Heßloch (DE)
(86) Internationale Anmeldenummer: PCT/EP2010/001763
(87) Internationale Veröffentlichungsnummer: WO 2010/118810

(56) Entgegenhaltungen:
- EP-A1- 1 568 629
- JP-U- 63 113 024

## Beschreibung

Die Erfindung bezieht sich auf eine Vorrichtung gemäß Oberbegriff Patentanspruch 1 sowie auf ein Verfahren gemäß Oberbegriff Patenanspruch 11.

In vielen Bereichen der Wirtschaft und dabei insbesondere auch im Bereich Nahrungsmittel und Getränke ist es vielfach erforderlich, Produkte für den Transport - und/oder die Lagerung und/oder den Abverkauf zu stapeln, und zwar in der Form, dass die Produkte in dem Produktstapel in mehreren, jeweils mehrere Produkte aufweisenden Lagen in vertikaler Richtung übereinander angeordnet sind,

Aus der DE 600 01 383 T2 ist eine Vorrichtung zum Stapeln von Chipkarten bekannt. Zum Zwecke der Abkühlung und Entgasung werden die Chipkarten einem Hubförderer zugeleitet, der die einzelnen Chipkarten in horizontal ausgerichteter Lage anhebt. Hierzu sind an zwei Seiten endlos umlaufende Transportbänder vorstehen, die die Chipkarten seitlich erfassen und einxeln anheben, transportieren und zeitweise in vertikalem Abstand halten. Am oberen Ende des Senkrechtförderers fällt der vorhanden Stapel auf die neu heran geförderte Karte herab, sobald die Haltefinger der umlaufenden Transportbänder nicht mehr im Eingriff sind. Der so gebildete Stapel an Chipkarten oder einzelne Chipkarten können entnommen werden.

Weiterhin ist aus der JP 63 113024 U eine Hub- und Stapelvorrichtung bekannt, bei welcher Stückgüter einem senkrechten Steigförderer zugeleitet werden, der diese voneinander abstandet kontinuierlich aufnimmt und anhebt. Am oberen Ende, schließt sich hieran ein Quertransport an, der die einzelnen Stückgüter zur oberen Eingangsseite einer abwärtslaufenden Stapelvorrichtung leitet. Diese weist vertikal ausgerichtete und endlos umlaufende Transportbänder auf, die mit ebenfalls umlaufenden Auflagewinkeln versehen sind. Die einzelnen Stückgüter werden kontinuierlich zugeleitet und direkt aufeinander als Stapel abgestellt, bzw. das unterste Stückgut wird von den gegenüberliegenden Auslagewinkeln gehalten. Der sich bildende Stapel wird kontinuierlich abgesenkt, bis das nächste Paar Auflagewinkel in Eingriff kommt. Die kompletten Stapel werden am unteren Ende der Transportbänder auf einen horizontal verfahrbaren Schlitten oder Wagen abgesetzt und abgeleitet. Diese Stapelvorrichtung ist konstruktiv sehr aufwändig und erfordert eine relativ große Aufstellungsfläche. Die JP 63 11024 U offenbart eine vorrichtung gema̋ß Oberbegriff Anspruch 1 sowie ein Verfahren gema̋ß Oberbegriff Anspruch 11.

Aufgabe der Erfindung ist es, eine Vorrichtung aufzuzeigen, die bei vereinfachter Konstruktion ein Stapeln von Produkten mit hoher Leistung ermöglicht.

Zur Lösung dieser Aufgabe ist eine Vorrichtung entsprechend dem Patentanspruch 1 ausgebildet. Ein Verfahren zum Stapeln von Produkten ist Gegenstand des Patentanspruchs 11.

"Produkte" im Sinne der Erfindung sind insbesondere, aber nicht ausschließlich Gebinde aus mehreren, beispielsweise durch Umverpackung oder Folie (z.B. auch Schrumpffolie) zu dem Gebinde zusammengefassten und mit Füllgut gefüllten Packmitteln, beispielsweise in Form von Flaschen, Dosen, Weichverpackungen usw. Produkte im Sinne der Erfindung sind aber weiterhin auch andere größere und stapelbare Produkte oder Verpackungen, wie z.B. Kartons usw.

Die Erfindung wird im Folgenden anhand der Figuren, die eine Vorrichtung zum Stapeln von Gebinden in schematischer Funktionsdarstellung und in Vorderansicht bzw. in Seitenansicht zeigen, näher erläutert. Zur Verdeutlichung sind in den Figuren mit X, Y und Z drei jeweils senkrecht zu einander orientierte Raumachsen wiedergegeben.

Die in den Figuren allgemein mit 1 bezeichnete Vorrichtung dient zum Stapeln von Produkten oder Gebinden 2, d.h. zur Bindung von mehrlagigen Produktstapein 2.2 aus mehreren Produktlagen 2.1, die ihrerseits jeweils aus mehreren Produkten 2 bestehen und in vertikaler Richtung, d.h. in der Z-Achse über einander gestapelt sind. Wesentlicher Bestandteil der Vorrichtung 1 ist eine an einem nicht bezeichneten Vorrichtungsgestell vorgesehene Transport- und Hubeinrichtung 3, die bei der dargestellten Ausführungsform von insgesamt vier jeweils eine geschlossene

Schlaufe blidenden riemen- oder Kettenartigen Transport- oder Hubelementen 4 gebildet ist. Die Transpartelemente 4 sind jeweils über zwei Umlenkrollen oder - räder geführt, nämlich über ein oberes Umlenkrad 5 und ein unteres Umienkrad 6. Die Anordnung ist wetterhin so getroffen, dass jedes Transport- oder Hubeisment 4 zwischen seinen Umlenkrädern 5 und 6 zwei sich in vertikaler Richtung (Z-Achse) erstreckende Längen 4.1 und 4 2 bildet. Jeweils zwei Transport- und Hubelemente 4 sind mit ihren Langen 4.1 seltlich an einem Hubschacht oder an einer Förder - oder Hubstrecke 7 angeordnet, und zwar derart, dass die Achsen der Umlenkräder 5 und ebenso die Achsen der Umlenkräder 6 an jeder Selte der Förder- oder Hubstrecke 7 horizontal und achsgleich miteinander in der Y-Achse angeordnet sind

D,e der Förder- oder Hubstrecke 7 benachbarten Längen 4.1 der Transportelemente 4 sind auf jeder Seite der Förder- oder Hubstrecke 7 in einer gemeinsamen, parallel zu den Achsen der Umlenkräder 5 und 6 orientierten vertikalen Ebene (Y/Z-Ebene) angeordnet, und zwar so, dass jedem Transport- und Hubelement 4 auf einer Seite der Seite der Förder- oder Hubatrecke 7 ein Transport- und Hubelement 4 auf der anderen Seite der Förder- oder Hubstrecke 7 gegenüber liegt

An der Außenseite der Schiaufen der Transport- und Hubelemente 4 sind in gleichmäßigen Abständen Mitnehmer 8 befestigt, die beispielsweise von Winkelprofilen gebildet sind und Auflage oder Transportflachen von Produktaufnahmen 9 für die produkte 2 bilden Hierfür sind die Mitnehmer 8 auf den beiden Seiten der Förder - oder Hubstrecke 7 in horizontaler oder im Wesentlichen in horizontaler Richtung (X-Acnse) einander gegenüber liegend vorgesehen und erstrecken sich auf jeder Seite der Förder- oder Hubstrecke 7 parallel zu den Achsen der Umlenkräder 5 und 6 (Y-Achse) zwischen den beiden Transport- und Hubelement 4. Jede Produktaufnahme 9 ist alse von zwei derartigen leistenartigen Mitnehmern 8 gebildet, auf denen die in der jeweiligen Produktaufnahme 9 aufgenommenen Produkte 2 mit Randbereichen sufliegen. Die Breite, die die Förder- oder Hubstrecke 7 in horizontaler Richtung (X-Achse) aufweist ist gleich oder geringfügig größer als die Breite, die die Produkte 2 in dieser Achsrichtung besitzen Die Länge, die die Förder- oder Hubstrecke 7 in horizontaler Richtung und parallel zu den Achsen der Umlenkräder 5 und 6 (Y-Achse) aufweist, entspricht der Gesamtlänge, die mehrere unmittelbar aneinander anschließende und eine Produktlage 2 1 bildende Produkte 2 in dieser Achsrichtung besitzen, d.h. bel der dargestellten Ausführungeform etwa der dreifachen Länge eines Produktes 2. Der Abstand, den die Mitnehmer 8 an den Transportelementen 4 voneinander aufweisen ist geringfügig größer als die Hähe der Produkte 2

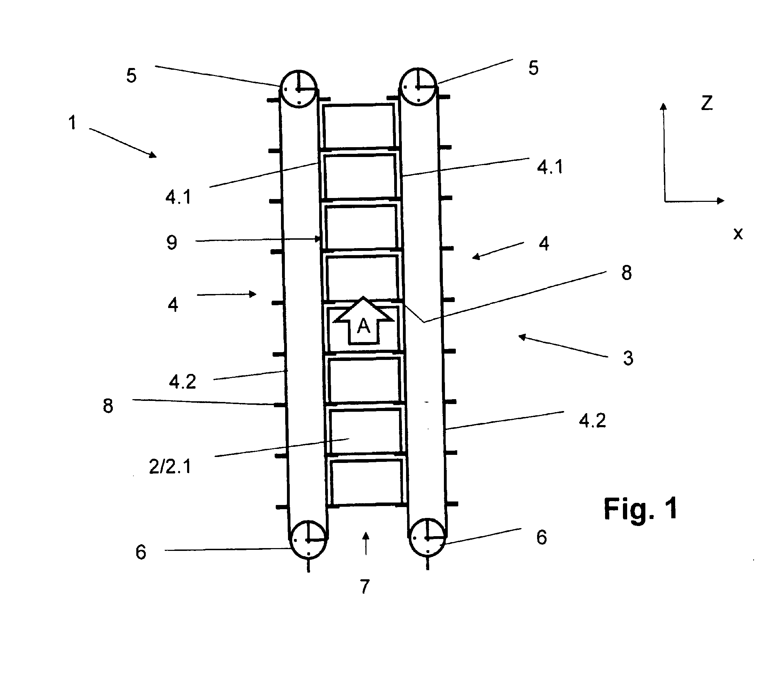

Durch einen nicht dargesteilten, gesteuerten Antrieb sind die Transportelemente 4 über die oberen Umlenkräder 5 gesteuert antreibbar, und zwar derart, dass sich die innenliegenden Längen 4.1 in vertikaler Richtung (Z-Achse) nach oben bewegen, wie dies mit den Pfellen A in der Figur 1 angedeutet ist.

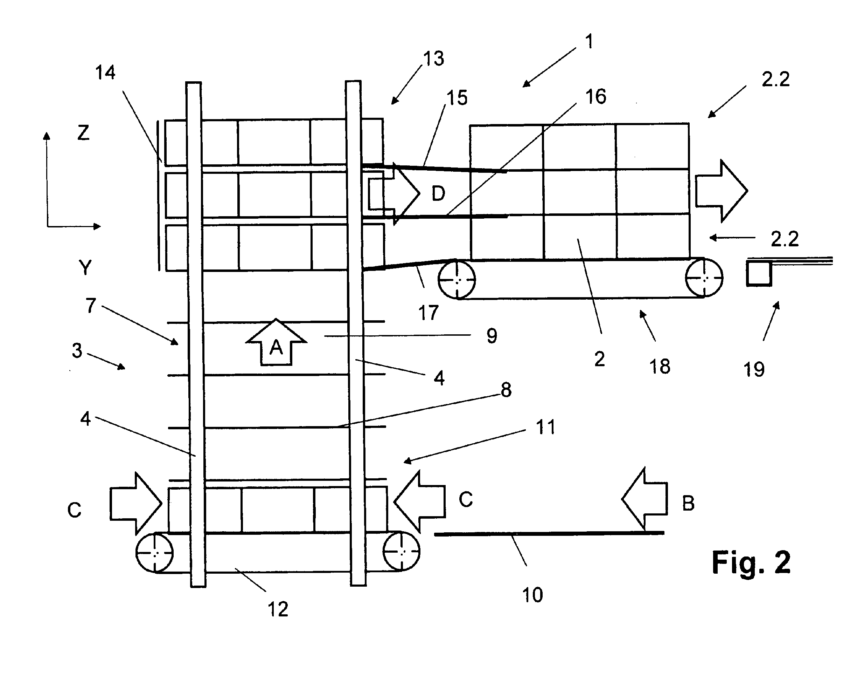

Zur Stapelbildung wird über einen äußeren Transporteur 10 Jeweils eine Produktiage 2.1 bildende Anzahl an Produkten 2 einer Belade- oder Aufgabeposition 11 der Förder- oder Hubstrecke 7 zugeführt (Pfeil 8) und dort zusammengeschoben, wie des mit den Pfeiten C angedeutet ist, sodass die Produkte 2 an der Aufgabeposition 11 dicht aneinander anschließend eine Produktlage 2.1 in einer Produktaufnahme 9 bilden Zum Einbringen und Positionieren der Produkte 2 in der betreffende Produktaufnahme 8 ist an die Aufgabeposition 11 ein in der Figur 2 schematisch mit 12 bezerchnetes Transportband vorgesehen.

Durch Einschalten des Antriebs für die Transportelemente 4 wird die jeweilige an der Aufgabeposition 11 in einer Produktaufnahme 9 gebildete Produktlage 2.1 von dem Transportband 12 angehoben, und zwar soweit, dass an der Aufgabeposition 11 erneut eine Produktaufnahme 9 bereitsteht, in der eine weitere Produktiage 2.1 gebildet werden kann, die dann anschließend wiederum durch Einschalten des An triebs für die Transportelemente 4 mit der Produktaufnahme 9 bzw. mit den beiden Mitnehmern 8 dieser Aufnahme angehoben wird usw

An der Oberseite der Vorrichtung 1 ist eine Abgabe- oder Ausschubposition 13 gebildet, an der bei nicht bewegten Transportelementen 4 jeweils mehrere Produktlagen 2.1 mittels eines Puschers oder Ausschubelementes 14 seitlich, d.h. in horizontaler Richtung und parallel zu den Achsen der Umienkräder 5 und 6 (Y-Achse) susgeschoben werden (PfeiID), und zwar zertgleich zur Bildung des Produktstapels 2.2. Das Ausschieben erfolgt unter Verwendung von Trichter- oder Führungsblechen 15. 16 und 17, über die die einzeinen Produktlagen 2.1 beim Ausschleben zu dem auf einem Transporteur 18 angeordneten Produktstapel 2.2 zusammengeführt werden.

Über den Transporteur 18 wird der jeweils gebildete Produktstapal 2 2 einer weiteren Verwendung zugeführt. Beispielsweise bei Ausbirdung der Vorrichtung 1 als Paiettierer wird der Produktstapel 2.2 auf eine Transport- und/oder Lagerpalette 19 aufgeschoben Nach dem Ausschieben eines Produktstapels 2.2 bzw. der diesen Stapel bildenden Produktlagen 2.1 erfolgt das Ausschieben des nächsten Produktstapels 2 2 sobald wiederum die arforderliche Anzahl von Produktiagen 2.1 an die Ausschubposition 13 gefördert wurde.

Dadurch, dass die Transportelemente 4 umlaufend angetrieben sind, ist es möglich, die Stapelbildung der Produkte 2 bereits innerhalb der Hubvorrichtung 3 weitestgehend vorzubereiten, sodass für die endgültige Stapelbildung lediglich das gerneinsame Ausschieben der den jeweiligen Produktstapel 2 2 bildenden Lagen 2 1 an der Ausschubposition 13 erforderlich ist.

Die Vorrichtung 1 zeichnet sich u.a. durch eine hohe Leistung bei vereinfachter Konstruktion aus. Die Erfindung wurde voranstenend an einem Ausführungsbeispiel beschrieben. Es versteht sich, dass Änderungen sowie Abwandlungen möglich sind, ohne dass dadurch der der Erfindung zugrundeliegende Erfindungsgedanke verlassen wird.

Ven der Erfindung ist naturlich umfangen dass die Vorrichtung und das Verfahren nicht von untan nach oben sondern in analoger Weise von oben nach unter förden. Dabei ist der äußere Transporteur 10 oberhalb vom Transporteur 18 angeordnet ist. Bei dieser Anordnung werden die Produkte 2 mittels eines Schiebers in die Produktaufnahme 9 geschoben werden. Anschließend werden die Mitnehmer nach unten getastet

### Bezugszeichenliste

| | |
|---|---|
| 1 | Vorrichtung |
| 2 | Produkt |
| 2.1 | Produktlage |
| 2.2 | Produktstapel |
| 3 | Transport- und Hubeinrichtung |
| 4 | Transport- oder Hubelement |
| 4.1,4.2 | Länge der Schlaufe des Transport- oder Hubelementes |
| 5, 6 | Umlenkrad |
| 7 | Förder- oder Hubstrecke |
| 8 | leistenartiger Mitnehmer |
| 9 | Produktaufnahme |
| 10 | äußerer Transporteur |
| 11 | Aufgabeposition |
| 12 | vorrichtungsinterner Transporteur |
| 13 | Abgabe- oder Ausschubposition |
| 14 | Ausschubelement |
| 15, 16, 17 | Trichter- oder Führungsblech |
| 18 | Transporteur |
| 19 | Palette |
| | |
| A | Förder- oder Hubrichtung |
| B | Transportrichtung des äußeren Transporteurs 10 |
| D | Ausschubrichtung |
| | |
| X, Y, Z | Achsrichtung |

## Patentansprüche

1. Vorrichtung zum Stapeln von Produkten (2) als Produktstapel (2.2) mit wenigstes zwei im Stapel übereinander angeordneten Produktlagen (2.1), wobei eine Transport- und Hubeinrichtung (3) mit wenigstens einem eine geschlossene Schlaufe bildenden, endlos umlaufend antreibbaren Transport- oder Hubelement (4), durch mehrere am Transport- oder Hubelement (4) aufeinander folgend und voneinander beabstandet vorgesehenen Mitnehmern (8), die jeweils Auflage- und Transportflächen von Produktaufnahmen (9) bilden, welche mit dem Transport- und Hubelement (4) auf einer Förder- oder Hubstrecke (7) in einer Förder- oder Hubrichtung (A) zwischen einer Aufgabeposition (11) zum Beladen der Produktaufnahmen (9) mit jeweils einer Produktlage (2.1) und einer Abgabe- oder Abgabe- oder Ausschubposition (13) bewegbar sind, welche zumindest in einer ersten vertikalen Achsrichtung (Z-Achse) von der Aufgabeposition (11) beabstandet ist, wobei die Vorrichtung mindestens ein Ausschubelement (14) aufweist,
**dadurch gekennzeichnet, dass**
vertikal übereinander angeordnete Trichter- oder Führungsbleche (15, 16, 17) vorgesehen sind und je ein Trichter- und Führungsblech (15, 16, 17) einer Produktaufnahme (9) im Bereich der Ausschubposition (13) zugeordnet ist, sowie das mindestens ein Ausschubelement (14) der Abgabe - oder Ausschubposition (13) zum unmittelbaren, vertikal unverdichteten, mehrlagigen Ausbringen und Stapeln Produktlagen (2.1) aus jeweils wenigstens zwei in Transportrichtung des Transport- oder Hubelementes (4) aufeinander folgenden Produktaufnahmen (9), wobei durch das mindestens eine Ausschubelement (14) die Produktlagen (2.1) senkrecht zur Förder- und Hubrichtung (A) und in Richtung der Trichter- und Führungsbleche (15, 16, 17) bewegbar sind.

2. Vorrichtung nach Anspruch 1, **dadurch gekennzeichnet, dass** die Aufgabeposition (11) auf einem Niveau unterhalb der Abgabe- oder Ausschubposition (13) vorgesehen ist.

3. Vorrichtung nach Anspruch 1 oder 2, **dadurch gekennzeichnet, dass** Mittel zum Ausbringen von Produkten in die Produktaufnahme (9) angeordnet sind, wobei die Mittel zum Ausbringen von wenigstens einem Schieber gebildet sind.

4. Vorrichtung nach einem der vorhergehenden Ansprüche, **dadurch gekennzeichnet, dass** die Transport- und Hubeinrichtung (3) wenigstens vier jeweils eine Schlaufe bildende, endlos umlaufend antreibbare Hub- oder Transportelemente (4) aufweist, dass wenigstens zwei dieser Hub- oder Transportelemente (4) mit ihren sich in der Förder- oder Hubrichtung (A) bewegenden Schlaufenlängen (4.1) an jeweils einer Seite der Förderstrecke (7) vorgesehen sind, und dass die Mitnehmer (8) jeweils an wenigstens zwei an einer gemeinsamen Seite der Förderstrecke (7) angeordneten Hub- oder Transportelemente (4) befestigt sind.

5. Vorrichtung nach einem der vorhergehenden Ansprüche, **dadurch gekennzeichnet, dass** jedem Mitnehmer (8) an einer Seite der Förderstrecke (7) ein Mitnehmer (8) an der anderen Seite der Förderstrecke in einer weiten Achsrichtung (X-Achse) gegenüberliegt, die senkrecht zur ersten Achsrichtung (Z-Achse) und/oder zur Förder- oder Hubrichtung (A) orientiert ist, und dass die einander gegenüberliegenden Mitnehmer (8) Auflage- und Transportflächen einer gemeinsamen Produktaufnahme (9) bilden.

6. Vorrichtung nach Anspruch 5, **dadurch gekennzeichnet, dass** die einander gegenüberliegenden Mitnehmer (8) voneinander beabstandet sind, und dass dieser Abstand kleiner ist als die Abmessung, die die Produkte (2) in der zweiten, Achsrichtung (X-Achse) aufweisen.

7. Vorrichtung nach einem der vorhergehenden Ansprüche, **dadurch gekennzeichnet, dass** der Abstand, den die Mitnehmer (8) oder die von diesen gebildeten Produktaufnahmen (2) in der Förder- oder Hubrichtung (A) aufweisen, etwa gleich oder geringfügig größer ist als die Abmessung, die die Produkte (2) in der in der Förder- oder Hubrichtung (A) besitzen.

8. Vorrichtung nach einem der Ansprüche 6 oder 7, **dadurch gekennzeichnet, dass** die Aufgabeposition (11) für ein Einbringen der eine Produktlage (2.1) bildenden Produkte (2) in einer dritten Achsrichtung (Y-Achse) ausgebildet ist, die senkrecht zur ersten und zweiten Achsrichtung (Z-Achse); X-Achse) orientiert ist.

9. Vorrichtung nach einem der Ansprüche 6-8, **dadurch gekennzeichnet, dass** die Abgabe- oder Ausschubposition (13) für ein Ausbringen der dem Produktstapel (2.2) bildenden Produktlagen (2.1) in einer dritten Achsrichtung (Y-Achse) ausgebildet ist, die senkrecht zur ersten und zweiten Achsrichtung (Z-Achse); X-Achse) orientiert ist.

10. Vorrichtung nach einem der vorhergehenden Ansprüche, **gekennzeichnet durch** einen Transporteur (12) zum Einbringen und/oder Positionieren der die jeweilige Produktlage (2.1) bildenden Produkte (2) an der Aufgabeposition (11) und/oder **durch** einen Transporteur (18) zum Wegtransportieren des Produktstapels (2.2) an der Abgabe- oder Ausschubposition (13).

11. Verfahren zum Stapeln von Produkten (2) als Produktstapel (2.2) mit wenigstes zwei im Stapel übereinander angeordneten Produktlagen (2.1), wobei
- die Produktlagen (2.1) in Produktaufnahmen (9) einer eine Vielzahl solcher Aufnahmen aufweisenden Transport- und Hubeinrichtung (3) vorgebildet werden, und zwar durch Einbringen jeweils einer eine Produktlage (2.1) bildende Anzahl von Produkten (2) in jede der vertikal voneinander beabstandeten Aufnahme (9) an einer Aufgabeposition (11) der Transport- und Hubeinrichtung (3), und dass
an einer Abgabe- oder Ausschubposition (13) aus in Transportrichtung (A) aufeinander folgenden Aufnahmen (9) jeweils eine der Anzahl der Lagen im Produktstapel (2.1) entsprechende Anzahl von Produktlagen (2.1) unter Bildung eines Produktstapels (2.1) ausgebracht wird, **dadurch gekennzeichnet, dass**
- die vertikale Annäherung der in den Aufnahmen (9) übereinander angeordneten Produktlagen (2.1) zeitgleich mit dem Ausbringen der Produktlagen (2.1) erfolgt.

12. Verfahren nach Anspruch 12, **dadurch gekennzeichnet, dass** das Ausbringen der den jeweiligen Produktstapel bildenden Produktlagen (2.1) zeitgleich erfolgt.

## Claims

1. Device for stacking products (2) as a product stack (2.2), having at least two product layers (2.1) disposed one above the other in a stack, wherein a transport and lifting device (3) with at least one transport or lifting element (4) forms a closed loop and is continuously rotatingly drivable by several flights (8) that are provided at the transport or lifting element (4) sequentially and distanced from each other, said flights each forming support and transport surfaces of product receptacles (9), which can be moved with the transport and lifting element (4) on a conveying or lifting section (7) in a conveying or lifting direction (A) between a feeding position (11) for loading the product receptacles (9) with a product layer (2.1) each and a dispensing position or a dispensing or discharge position (13), which is distanced from the feeding position (11) at least in a first vertical axial direction (Z axis), wherein the device has at least one discharge element (14),
**characterised in that**
hopper or guiding plates (15, 16, 17), vertically arranged one above the other, are provided and a hopper and guiding plate (15, 16, 17) each of a product receptacle (9) is allocated in the area of the discharge position (13), and the at least one discharge element (14) of the dispensing or discharge position (13) for direct, vertically non-compacted, multi-layered outputting and stacking of product layers (2.1) each from at least two sequential product receptacles (9) in the transport direction of the transport or lifting element (4), wherein, by means of the at least one discharge element (14), the product layers (2.1) can be moved perpendicular to the conveying and lifting direction (A) and in the direction of the hopper and guiding plates (15, 16, 17).

2. Device according to claim 1, **characterised in that** the feeding position (11) is provided at a level underneath the dispensing or discharge position (13).

3. Device according to claim 1 or 2, **characterised in that** means for outputting products into the product receptacle (9) are arranged, wherein the means for outputting are formed by at least one pusher.

4. Device according to any one of the preceding claims, **characterised in that** the transport and lifting device (3) has at least four lifting or transport elements (4) each forming a loop and being continuously rotatingly drivable, that at least two of these lifting or transport elements (4) are provided with their loop lengths (4.1) moving in the conveying or lifting direction (A) each on one side of the conveying section (7), and that the flights (8) each are attached to at least two lifting or transport elements (4) arranged on a common side of the conveying section (7).

5. Device according to any one of the preceding claims, **characterised in that** each flight (8) on one side of the conveying section (7) is opposite a flight (8) on the other side of the conveying section in a further axial direction (X axis), said axial direction being oriented perpendicular to the first axial direction (Z axis) and/or to the conveying or lifting direction (A), and that the opposing flights (8) form support and transport surfaces of a common product receptacle (9).

6. Device according to claim 5, **characterised in that** the opposing flights (8) are spaced from one another and that this spacing is smaller than the dimension of the products (2) in second axial direction (X axis).

7. Device according to any one of the preceding claims, **characterised in that** the spacing of the flights (8) or the product receptacles (2), formed by them, in the conveying or lifting direction (A), is approximately equal to or slightly greater than the dimension of the products (2) in the conveying or lifting direction (A).

8. Device according to any one of claims 6 or 7, **characterised in that** the feeding position (11) for introducing the products (2) which form a product layer (2.1) is designed in a third axial direction (Y axis) which is oriented perpendicular to the first and second axial directions (Z axis; X axis).

9. Device according to any one of claims 6 to 8, **characterised in that** the dispensing or discharge position (13) is designed for outputting the product layers (2.1) which form the product stack (2.2) in a third axial direction (Y axis) which is oriented perpendicular to the first and second axial directions (Z axis; X axis).

10. Device according to any one of the preceding claims, **characterised by** a transporter (12) for introducing and/or positioning the products (2) which form the respective product layer (2.1) at the feeding position (11) and/or by a transporter (18) for transporting away the product stack (2.2) at the dispensing or discharge position (13).

11. Method for stacking products (2) as a product stack (2.2) having at least two product layers (2.1) disposed one above the other in a stack, wherein
- the product layers (2.1) are pre-formed in product receptacles (9) of a transport and lifting device (3) having a plurality of such receptacles, by always introducing one number of products (2) forming a product layer (2.1) into each of the vertically spaced receptacles (9) at a feeding position (11) of the transport and lifting device (3), and that,
at a dispensing or discharge position (13) from sequential receptacles (9) in the transport direction (A), always one of the number of product layers (2.1) corresponding to the number of layers in the product stack (2.1) is output, forming a product stack (2.1), **characterised in that**
- the vertical approach of the product layers (2.1) disposed one above the other in the receptacles (9) happens simultaneously with outputting the product layers (2.1).

12. Method according to claim 11, **characterised in that** the outputting of the product layers (2.1) that form the respective product stack happens simultaneously.

## Revendications

1. Dispositif servant à empiler des produits (2) sous la forme d'une pile de produits (2.2) comprenant au moins deux couches de produits (2.1) disposées l'une sur l'autre dans la pile, sachant qu'un système de transport et de levage (3) présente au moins un élément de transport et de levage (4) formant une boucle fermée et pouvant être entraîné en rotation sans fin, sur lequel élément de transport et de levage (4) sont disposés plusieurs entraîneurs (8) se suivant les uns les autres et espacés les uns des autres, lesquels entraîneurs forment respectivement des surfaces d'appui et de transport de logements de produits (9), qui peuvent être déplacés avec l'élément de transport et de levage (4) sur un trajet de transport ou de levage (7) dans un sens de transport ou de levage (A) entre une position de chargement (11) servant à charger les logements de produits (9) avec respectivement une couche de produits (2.1) et une position de déchargement ou de retrait (13), laquelle est tenue à distance au moins dans une première direction axiale verticale (axe Z) de la position de chargement (11), sachant que le dispositif présente au moins un élément expulseur (14),
**caractérisé en ce que**
sont prévues des tôles forme d'entonnoir ou de guidage (15, 16, 17) disposées verticalement les unes sur les autres, et **en ce que** respectivement une tôle en forme d'entonnoir et de guidage (15, 16, 17) est associée à un logement de produits (9) dans la zone de la position de retrait (13), et **en ce que** l'élément expulseur (14) au moins au nombre de un est associé à la position de déchargement ou de retrait (13) servant à distribuer et à empiler directement, de manière non compacte verticalement et en plusieurs couches des couches de produits (2.1) issues respectivement d'au moins deux logements de produits (9) se suivant dans le sens de transport de l'élément de transport ou de levage (4), sachant que l'élément expulseur (14) au moins au nombre de un permet de déplacer les couches de produits (2.1) de manière perpendiculaire par rapport au sens de transport et de levage (A) et dans la direction des tôles en forme d'entonnoir et de guidage (15, 16, 17).

2. Dispositif selon la revendication 1, **caractérisé en ce que** la position de chargement (11) est prévue sur un niveau sous la position de déchargement ou de retrait (13).

3. Dispositif selon la revendication 1 ou 2, **caractérisé en ce que** des moyens servant à distribuer des produits sont disposés dans le logement de produits (9), sachant que les moyens servant à la distribution sont formés par au moins un coulisseau.

4. Dispositif selon l'une quelconque des revendications précédentes, **caractérisé en ce que** le système de transport et de levage (3) présente au moins quatre éléments de levage ou de transport (4) formant respectivement une boucle, pouvant être entraînés en rotation sans fin, **en ce qu'**au moins deux desdits éléments de levage ou de transport (4) sont prévus par leurs longueurs de boucle (4.1) se déplaçant dans le sens de transport ou de levage (A) au niveau respectivement d'un côté du trajet de transport (7), et **en ce que** les entraîneurs (8) sont fixés respectivement au niveau au moins de deux éléments de levage ou de transport (4) disposés au niveau d'un côté commun du trajet de transport (7).

5. Dispositif selon l'une quelconque des revendications précédentes, **caractérisé en ce qu'**un entraîneur (8) situé au niveau de l'autre côté du trajet de transport fait face dans une large direction axiale (axe X) à chaque entraîneur (8) au niveau d'un côté du trajet de transport (7), laquelle direction axiale est orientée de manière perpendiculaire par rapport à la première direction axiale (axe Z) et/ou par rapport au sens de transport ou de levage (A), et **en ce que** les entraîneurs (8) se faisant face les uns les autres forment des surfaces d'appui et de transport d'un logement de produits (9) commun.

6. Dispositif selon la revendication 5, **caractérisé en ce que** les entraîneurs (8) se faisant face les uns les autres sont espacés les uns des autres, et **en ce que** cette distance est plus petite que la dimension que les produits (2) présentent dans la deuxième direction axiale (axe X).

7. Dispositif selon l'une quelconque des revendications précédentes, **caractérisé en ce que** la distance, que les entraîneurs (8) ou les logements de produits (2) formés par ces derniers présentent dans le sens de transport ou de levage (A), est à peu près égale ou légèrement plus grande que la dimension que les produits (2) présentent dans le sens de transport ou de levage (A).

8. Dispositif selon l'une quelconque des revendications 6 ou 7, **caractérisé en ce que** la position de chargement (11) est réalisée pour placer les produits (2) formant une couche de produits (2.1) dans une troisième direction axiale (axe Y), laquelle est orientée de manière perpendiculaire par rapport à la première et à la deuxième direction axiale (axe Z ; axe X).

9. Dispositif selon l'une quelconque des revendications 6 - 8, **caractérisé en ce que** la position de déchargement ou de retrait (13) est réalisée pour distribuer les couches de produits (2.1) formant la pile de produits (2.2) dans une troisième direction axiale (axe Y), laquelle est orientée de manière perpendiculaire par rapport à la première et à la deuxième direction axiale (axe Z ; axe X).

10. Dispositif selon l'une quelconque des revendications précédentes, **caractérisé par** un transporteur (12) servant à placer et/ou à positionner les produits (2) formant les couches de produits (2.1) respectives au niveau de la position de chargement (11) et/ou par un transporteur (18) servant à évacuer la pile de produits (2.2) au niveau de la position de déchargement ou de retrait (13).

11. Procédé servant à empiler des produits (2) sous la forme de piles de produits (2.2) comprenant au moins deux couches de produits (2.1) disposées les unes sur les autres dans la pile, sachant
- que les couches de produits (2.1) sont préalablement formées dans des logements de produits (9) d'un système de transport et de levage (3) présentant une pluralité de logements de ce type, à savoir en plaçant respectivement un certain nombre de produits (2) formant une couche de produits (2.1) dans chacun des logements (9) espacés verticalement les uns des autres au niveau d'une position de chargement (11) du système de transport et de levage (3), et
- que respectivement un certain nombre de couches de produits (2.1), correspondant au nombre de couches dans la pile de produits (2.1) est distribué au niveau d'une position de déchargement ou de retrait (13) depuis des logements (9) se suivant les uns les autres dans le sens de transport (A) en formant une pile de produits (2.1),
**caractérisé en ce**
- **que** le rapprochement vertical des couches de produits (2.1) disposées les unes sur les autres dans les logements (9) est effectué en même temps que la distribution des couches de produits (2.1).

12. Procédé selon la revendication 12, **caractérisé en ce que** la distribution des couches de produits (2.1) formant la pile de produits respective se fait simultanément.
